# EUROPÄISCHE PATENTSCHRIFT

(11) **EP 3 265 830 B1**
(45) Veröffentlichungstag und Bekanntmachung des Hinweises auf die Patenterteilung: **08.04.2020**
(21) Anmeldenummer: 16709971.2
(22) Anmeldetag: 04.02.2016
(51) Int. Cl.: G01P 3/44, G01P 3/487, G01P 3/488, G01P 3/486

(54) **SENSOREINRICHTUNG FÜR EIN WÄLZLAGER SOWIE WÄLZLAGERANORDNUNG MIT EINER DERARTIGEN SENSOREINRICHTUNG**
SENSOR DEVICE FOR A ROLLING BEARING AND ROLLING BEARING ARRANGEMENT COMPRISING SUCH A SENSOR DEVICE
SYSTÈME DE CAPTEUR POUR UN PALIER DE ROULEMENT AINSI QU'ENSEMBLE FORMANT PALIER DE ROULEMENT COMPRENANT UN SYSTÈME DE CAPTEUR DE CE TYPE

(30) Priorität: 04.03.2015 DE 102015203861
(43) Veröffentlichungstag der Anmeldung: 10.01.2018
(73) Patentinhaber: Schaeffler Technologies AG & Co. KG, 91074 Herzogenaurach (DE)
(72) Erfinder: WINKLER, Markus, 91058 Erlangen (DE); MENSCH, Sergej, 97525 Schwebheim (DE); BAIER, Richard, 91086 Aurachtal (DE)
(86) Internationale Anmeldenummer: PCT/DE2016/200072
(87) Internationale Veröffentlichungsnummer: WO 2016/138897

(56) Entgegenhaltungen:
- DE-T2- 69 826 055
- JP-A- 2007 016 840
- US-A- 4 259 637
- US-B1- 6 655 844

## Beschreibung

Die vorliegende Erfindung betrifft eine Sensoreinrichtung für ein Wälzlager mit einem Außenring und einem Innenring, wobei einer der beiden Lagerringe in Bezug zum anderen der beiden Lagerringe drehbar ist. Die Sensoreinrichtung umfasst mindestens einen mit einem der beiden Lagerringe drehfest verbindbaren Sensor und einen mit dem anderen der beiden Lagerringe drehfest verbindbaren Signalgeber. Die vorliegende Erfindung betrifft weiterhin auch eine Wälzlageranordnung mit einem Wälzlager und einer mit dem Wälzlager verbundenen Sensoreinrichtung.

Wälzlageranordnungen mit integrierten Sensoreinheiten, auch als Sensorlager bekannt, dienen zum Erfassen unterschiedlicher Lagerzustandsgrößen, wie beispielsweise Drehzahl, Temperatur und Drehwinkel. Nachteilig an den vorbekannten Lösungen ist, dass derartige Wälzlageranordnungen in der Regel Spezialanfertigungen sind und somit nur in einer gewissen Variationsbreite zur Verfügung stehen.

Die DE 10 2012 202 522 A1 zeigt ein Sensorlager mit welchem Betriebszustände innerhalb eines Wälzlagers erfasst und an einen Signalempfänger übertragen werden können. Zur Messung der auf die Wälzkörper wirkenden Kräfte dient mindestens ein Messaufnehmer, welcher im Wälzkörperkäfig angeordnet ist. Der Wälzkörperkäfig weist eine Anzahl von Taschen zur Aufnahme von Wälzkörpern auf. Ein bis vier Taschen sind nicht mit Wälzkörpern bestückt, so dass anstelle der Wälzkörper Messaufnehmer angeordnet werden können. Die Messaufnehmer sind drehfest mit dem Käfig verbunden. Nachteilig ist dabei, dass es aufgrund der reduzierten Wälzkörperzahl zu wechselnden Belastungen im Lager und zu verschlechtertem Rundlauf kommen kann.

Die DE 10 2009 021 469 A1 beschreibt eine Sensorlagereinheit umfassend ein als Kugelrollenlager ausgebildetes Wälzlager mit einem an einem Lagerring angeordneten Sensorgehäuse mit einer integrierten Sensoreinrichtung zum Erfassen von Lagerbetriebszuständen. Das Sensorgehäuse ist als ein an einer freien Umfangsfläche bzw. einer Stirnfläche eines Lagerrings anliegender Adapterring ausgebildet. Der Adapterring ist so bemessen, dass die radialen Abmessungen bzw. die axialen Abmessungen der gesamten Sensorlagereinheit höchstens gleich denjenigen eines Kugellagers mit gleicher Tragleistung sind. Hierdurch können ein Kugellager und ein Kugelrollenlager mit integrierter Sensoreinrichtung bei gleichem Einbauraum gegeneinander ausgetauscht werden.

In der DE 10 2007 042 478 A1 ist eine Wälzlagereinrichtung mit einem Sensorsystem zur Generierung eines mit der Relativdrehung des Innenrings gegenüber dem Außenring in Bezug stehenden Sensorsignals beschrieben. Das Sensorsystem umfasst ein Sensororgan mit mindestens einem Reedkontakt, welches ein magnetisches Signal des Signalgebers als Sensorsignal erfasst. Das Sensororgan kann in einen als flache Ringscheibe ausgebildeten Lagerdeckelring eingebunden sein. Dieser Lagerdeckelring ist bevorzugt an dem im Betrieb feststehenden Lagerring fixiert. Der Signalgeber ist an einer Stirnseite des Wälzkörperkäfigs befestigt und kann als einzelner Permanentmagnet oder Encoderscheibe ausgebildet sein.

Die Aufgabe der vorliegenden Erfindung besteht darin, eine Sensoreinrichtung zur Verfügung zu stellen, welche aufwandsarm an ein Wälzlager anbaubar ist. Die Sensoreinrichtung soll derart gestaltet sein, dass an unterschiedliche Wälzlagerdurchmesser angepasste Sensoreinrichtungen mit verhältnismäßig geringem Aufwand herstellbar sind. Des Weiteren soll auch eine Wälzlageranordnung mit einer Sensoreinrichtung bereit gestellt werden.

Zur Lösung der erfindungsgemäßen Aufgabe dient eine Sensoreinrichtung gemäß dem beigefügten Anspruch 1.

Die erfindungsgemäße Sensoreinrichtung ist zum Anbau an ein Wälzlager vorgesehen. Sie umfasst einen an einer axialen Stirnfläche eines Außenrings des Wälzlagers befestigbaren äußeren Ring und einen an einer axialen Stirnfläche des Innenrings des Wälzlagers befestigbaren inneren Ring. Sensor und Signalgeber sind auf einander gegenüberliegenden Mantelflächen von äußerem und innerem Ring angeordnet.

Ein wesentlicher Vorteil der Sensoreinrichtung besteht in deren aufwandsarmen und somit auch preiswerten Fertigung. Innerer und äußerer Ring werden in der Regel aus einem Endlosprofil gefertigt, wodurch verschiedene gewünschte Durchmesser ohne großen Aufwand herstellbar sind. Für unterschiedliche Wälzlagerdurchmesser können daher entsprechende Sensoreinrichtungen vorgehalten werden, wobei lediglich der innere und der äußere Ring in den gängigen Maßen bereitzustellen sind. Die Sensoren können hingegen für alle Sensoreinrichtungen gleich ausgeführt sein und müssen nur an der entsprechenden Mantelfläche von äußerem oder innerem Ring angeordnet werden. Als Signalgeber können auf dem Markt in unterschiedlichen Durchmessern als Massenartikel zur Verfügung stehende Encoderringe Verwendung finden. Die Sensoreinrichtung lässt sich vergleichsweise einfach an ein Wälzlager anbauen. Hierzu müssen der äußere Ring an einer Stirnfläche des Außenrings und der innere Ring an einer Stirnfläche des Innenrings befestigt werden.

Nach einer vorteilhaften Ausführungsform ist der Sensor oder auch mehrere Sensoren auf einer an der Mantelfläche von äußerem oder innerem Ring befestigten flexiblen Leiterplatte angeordnet. Auf der Leiterplatte befinden sich vorzugsweise auch sensorelektronische Komponenten sowie eine Spannungsversorgung. Die auf der Leiterplatte angeordneten Bauelemente sind über Leiterbahnen elektrisch verbunden. Die Leiterplatte ist vorzugsweise an der Mantelfläche mittels Vergussmasse fixiert. Auf diese Weise sind die auf der Leiterplatte angeordneten, empfindlichen Bauelemente gut vor Feuchtigkeit und Schmutz geschützt. Außerdem werden die Bauelemente mittels Vergussmasse in ihrer Lage fixiert, wodurch die funktionswichtigen Abstände des bzw. der Sensoren prozesssicher realisierbar sind.

Der äußere Ring ist gemäß einer erfindungsgemäßen Ausführungsform als offener Ring ausgebildet. Durch seine offene Form zentriert sich der äußere Ring automatisch bei der Montage und kompensiert zusätzlich auch zwangsläufig auftretende Fertigungstoleranzen.

Der innere Ring ist vorzugsweise ebenfalls selbstzentrierend ausgeführt.

Als vorteilhaft hat es sich erwiesen, wenn die Sensoreinrichtung mittels einer Klebefolie am Wälzlager befestigbar ist. Die Klebefolie ist beidseitig mit Klebstoff benetzt, um eine Verbindung zwischen Sensoreinrichtung und Wälzlager herstellen zu können. In diesem Zusammenhang hat sich eine Ausführung der Klebefolie als Transportsicherung besonders günstig erwiesen. Hierzu umfasst die Klebefolie einen ersten umlaufenden Abschnitt im Bereich des inneren Rings und einen zweiten umlaufenden Abschnitt im Bereich des äußeren Rings. Der erste und der zweite Abschnitt sind mittels mehrerer Trennstege miteinander verbunden, wobei die Trennstege derart ausgestaltet sind, dass sie bei einer in Umfangsrichtung wirkenden Kraft reißen. Im Auslieferungszustand sind innerer und äußerer Ring der Sensoreinrichtung sowie Innenring und Außenring des Wälzlagers somit zueinander fixiert. Nach Montage des Wälzlagers, beispielsweise auf einem rotierbaren Bauelement, werden die Trennstege beim ersten Umdrehungsversuch zerreißen und dadurch den Innenring zum Außenring freigeben, wodurch nunmehr Drehungen möglich sind.

Der innere Ring ist vorzugsweise als Schleuderscheibe ausgeführt. Hierdurch kann Schmutz und Feuchtigkeit sicher abgeleitet werden, um den Signalgeber bzw. den Wälzkörperraum vor Verunreinigungen zu schützen.

Nach einer vorteilhaften Ausführungsform umfasst die Sensoreinrichtung ein Anschlusskabel zum Anschluss an eine Auswerteeinheit. Das Anschlusskabel ist vorzugsweise an der Leiterplatte befestigt. Es sind jedoch auch alternative Ausführungsformen möglich, bei denen die Datenübertragung zur Auswerteeinheit nicht über Kabel sondern drahtlos, vorzugsweise mittels Funksignal, beispielsweise über Bluetooth, erfolgt.

Zu Lösung der erfindungsgemäßen Aufgabe dient weiterhin auch eine Wälzlageranordnung gemäß dem beigefügten Anspruch 10.

Die erfindungsgemäße Wälzlageranordnung umfasst ein Wälzlager mit einem Außenring und einem Innenring, wobei einer der beiden Lagerringe in Bezug zum anderen der beiden Lagerringe drehbar ist, sowie eine mit dem Wälzlager verbundene Sensoreinrichtung der zuvor beschriebenen Art.

Eine bevorzugte Ausführungsform der Erfindung wird nachfolgend anhand der beigefügten Figuren näher erläutert. Es zeigen:
- Fig. 1: eine perspektivische Ansicht einer erfindungsgemäßen Wälzlageranordnung;
- Fig. 2: eine Explosivdarstellung der erfindungsgemäßen Wälzlageranordnung.

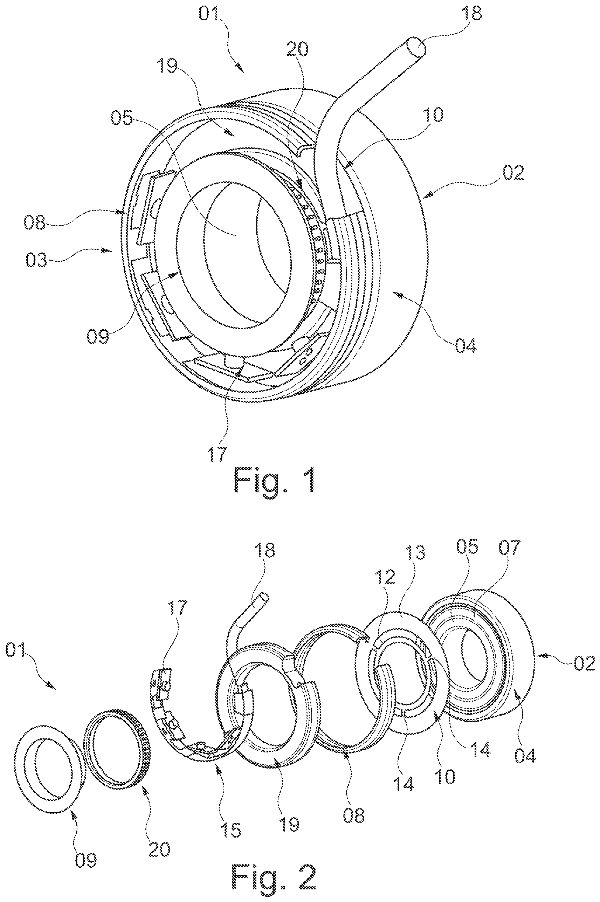

Fig. 1 zeigt eine perspektivische Ansicht einer erfindungsgemäßen Wälzlageranordnung 01, während in Fig. 2 eine Explosivdarstellung der Wälzlageranordnung gezeigt ist. Die Wälzlageranordnung 01 umfasst ein Wälzlager 02 sowie eine daran befestigte Sensoreinrichtung 03. Das Wälzlager 02 besitzt mindestens einen Außenring 04, einen Innenring 05 sowie zwischen Außenring 04 und Innenring 05 in einem Wälzkörperraum angeordnete Wälzkörper (nicht gezeigt). Einer der beiden Lagerringe 04, 05 ist in Bezug zum anderen Lagerring drehbar. Mit dem Außenring 04 ist beidseitig jeweils ein Dichtungsring 07 verbunden, welcher sich in radiale Richtung zwischen Innenring 05 und Außenring 04 erstreckt. Der Dichtungsring 07 schützt das Wälzlagerinnere vor Verunreinigungen.

Die Sensoreinrichtung 03 besitzt einen äußeren Ring 08 und einen inneren Ring 09. Der Durchmesser des äußeren Rings 08 korrespondiert mit dem Durchmesser des Außenrings 04 des Wälzlagers 02, sodass sich äußerer Ring 08 und Außenring 04 nach der Montage im Querschnitt wenigstens teilweise überdecken. Der Durchmesser des inneren Rings 09 korrespondiert mit dem Durchmesser des Innenrings 05 des Wälzlagers 02, sodass sich innerer Ring 09 und Innenring 04 nach der Montage im Querschnitt wenigstens teilweise überdecken. Äußerer und innerer Ring 08, 09 sind so ausgelegt, dass sie die notwendigen Montagekräfte schadlos verkraften.

Der äußere Ring 08 wird an einer axialen Stirnfläche des Außenrings 04 des Wälzlagers 02 befestigt. Der innere Ring 09 wird an einer axialen Stirnfläche des Innenrings 05 befestigt. Zur Befestigung der Sensoreinrichtung 03 am Wälzlager 02 dient bevorzugt eine beidseitig mit Klebstoff benetzte Klebefolie 10, beispielsweise in Form eines Polyurethan-Schaumstoffklebebandes mit Acrylat-Klebstoff.

Die Klebefolie 10 ist gleichzeitig als Transportsicherung ausgeführt. Hierzu umfasst sie einen ersten umlaufenden Abschnitt 12 im Bereich des inneren Rings 09 und einen zweiten umlaufenden Abschnitt 13 im Bereich des äußeren Rings 08. Der erste und der zweite Abschnitt 12, 13 sind mittels mehrerer Trennstege 14 miteinander verbunden. Die Trennstege 14 sind derart ausgestaltet, dass sie bei einer in Umfangsrichtung wirkenden Kraft reißen und somit den inneren Ring 09 zum äußeren Ring 08 bzw. den Innenring 05 zum Außenring 04 freigeben, wodurch nachfolgend Drehungen möglich sind.

Der äußere Ring 08 ist als offener Ring ausgeführt, hierdurch kann er sich bei der Montage selbstzentrieren. Des Weiteren können durch die offene C-Form des äußeren Rings 08 Fertigungstoleranzen ausgeglichen werden.

Bei der dargestellten Ausführungsform ist an der Innenmantelfläche des äußeren Rings 08 eine flexible Leiterplatte 15 angeordnet. Bei abgewandelten Ausführungen kann die Leiterplatte auch an der Außenmantelfläche des inneren Rings 09 angeordnet werden. Die Leiterplatte 15 trägt im Regelfall verschiedene Bauelemente 17, nämlich zumindest einen Sensor, die benötigten sensorelektronischen Komponenten sowie vorzugsweise auch eine Spannungsversorgung. Es können natürlich auch mehrere Sensoren zur Erfassung unterschiedlicher Zustandsgrößen Verwendung finden. Die Bauelemente 17 sind über Leiterbahnen elektrisch verbunden. An der Leiterplatte 15 ist ein Anschlusskabel 18 befestigt, welches an eine Auswerteeinheit (nicht dargestellt) angeschlossen werden kann, um zwischen Sensoreinrichtung 03 und Auswerteeinheit Daten austauschen zu können oder Energie von einer externen Stromversorgung zu liefern. Bei alternativen Ausführungsformen kann der Datenaustausch mit der Auswerteeinheit auch drahtlos per Funksignal erfolgen. Das Kabel 18 kann bevorzugt im Bereich des fehlenden Ringsegments des äußeren Rings 08 nach Außen geführt werden.

Die Leiterplatte 15 ist vorzugsweise mittels Vergussmasse 19 an der Innenmantelfläche des äußeren Rings 08 befestigt. Auf diese Weise sind die Bauelemente 17 sicher vor Feuchtigkeit und Schmutz geschützt. Durch die Vergussmasse 19 sind die Bauelemente 17 außerdem auch in ihrer Lage fixiert, wodurch funktionswichtige Abstände der Bauelemente, insbesondere der Sensoren, sicher eingehalten werden können.

Die Geometrie des inneren Rings 09 ist zweckmäßigerweise ebenfalls selbstzentrierend ausgeführt. Bevorzugt an der Außenmantelfläche des inneren Rings 09 ist ein Signalgeber 20 angeordnet. Der Signalgeber 20 ist vorzugsweise ein Encoderring. Es können sowohl aktive als auch passive Encoder Verwendung finden. Der Encoderring 20 kann optisch oder magnetisch abtastbar sein. Nach dem Zusammenbau liegt der Encoderring 20 dem auf der Leiterplatte 15 angebrachten Sensor 17 in radialer Richtung gegenüber, sodass der Sensor eine Relativdrehung zwischen äußerem und innerem Ring abtastet. Der innere Ring 09 ist vorzugsweise als Schleuderscheibe ausgeführt. Auf diese Weise können Signalgeber 20 bzw. Wälzkörperraum vor Verunreinigungen geschützt werden.

Um ein axiales Verrutschen der Wälzlageranordnung 01 zu vermeiden, ist das montierte Wälzlager 02, wie allgemein üblich, axial fixiert, beispielsweise mittels Pressverband, Sicherungsring oder Sicherungsmutter.

### Bezugszeichenliste

- 01: Wälzlageranordnung
- 02: Wälzlager
- 03: Sensoreinrichtung
- 04: Außenring
- 05: Innenring
- 06: -
- 07: Dichtungsring
- 08: äußerer Ring
- 09: innerer Ring
- 10: Klebefolie
- 11: -
- 12: erster Abschnitt der Klebefolie
- 13: zweiter Abschnitt der Klebefolie
- 14: Trennstege der Klebefolie
- 15: flexible Leiterplatte
- 16: -
- 17: Bauelemente / Sensor
- 18: Anschlusskabel
- 19: Vergussmasse
- 20: Signalgeber / Encoderring

## Patentansprüche

1. Sensoreinrichtung (03) für ein Wälzlager (02) mit einem Außenring (04) und einem relativ zu diesem drehbaren Innenring (05), wobei die Sensoreinrichtung umfasst:
• mindestens einen mit einem der beiden Lagerringe (04, 05) drehfest verbindbaren Sensor (17),
• mindestens einen mit dem anderen der beiden Lagerringe (04, 05) drehfest verbindbaren Signalgeber (20),
wobei die Sensoreinrichtung (03) weiterhin einen an einer Stirnfläche des Außenrings (04) des Wälzlagers (02) befestigbaren äußeren Ring (08) und einen an einer Stirnfläche des Innenrings (05) des Wälzlagers (02) befestigbaren inneren Ring (09) umfasst, wobei Sensor (17) und Signalgeber (20) auf einander gegenüberliegenden Mantelflächen von äußerem und innerem Ring (08, 09) angeordnet sind, und wobei der äußere Ring (08) als offener c-förmiger Ring ausgebildet ist, derart, dass bei Montage eine Selbstzentrierung des äußeren Rings (08) erfolgt.

2. Sensoreinrichtung (03) nach Anspruch 1, **dadurch gekennzeichnet, dass** der Sensor (17) auf einer an der Mantelfläche von äußerem oder innerem Ring (08, 09) befestigten flexiblen Leiterplatte (15) angeordnet ist.

3. Sensoreinrichtung (03) nach Anspruch 2, **dadurch gekennzeichnet, dass** die Leiterplatte (15) an der Mantelfläche mittels Vergussmasse (19) fixiert ist.

4. Sensoreinrichtung (03) nach einem der Ansprüche 1 bis 3, **dadurch gekennzeichnet, dass** sie mittels einer Klebefolie (10) am Wälzlager (02) befestigbar ist.

5. Sensoreinrichtung (03) nach Anspruch 4, **dadurch gekennzeichnet, dass** die Klebefolie (10) einen ersten umlaufenden Abschnitt (12) im Bereich des inneren Rings (09) und einen zweiten umlaufenden Abschnitt (13) im Bereich des äußeren Rings (08) umfasst, dass der erste und der zweite Abschnitt (12, 13) mittels mehrere Trennstege (14) miteinander verbunden sind, wobei die Trennstege (14) derart ausgestaltet sind, dass sie bei einer während der ersten Inbetriebnahme in Umfangsrichtung wirkenden Kraft zerreißen.

6. Sensoreinrichtung (03) nach einem der Ansprüche 1 bis 5, **dadurch gekennzeichnet, dass** der innere Ring (09) als Schleuderscheibe ausgeführt ist.

7. Sensoreinrichtung (03) nach einem der Ansprüche 1 bis 6, **dadurch gekennzeichnet, dass** sie ein Anschlusskabel (18) zum Anschluss an eine Auswerteeinheit aufweist, wobei das Anschlusskabel (18) an der Leiterplatte (15) befestigt ist und im Bereich eines fehlenden Kreisringsegments aus dem äußeren Ring (08) herausgeführt ist.

8. Sensoreinrichtung (03) nach einem der Ansprüche 2 bis 7, **dadurch gekennzeichnet, dass** aufder Leiterplatte (15) eine Spannungsversorgung und sensorelektronische Komponenten angeordnet sind, und dass die auf der Leiterplatte (15) angeordneten Bauelemente (17) über Leiterbahnen elektrisch verbunden sind.

9. Wälzlageranordnung (01) umfassend ein Wälzlager (02) mit einem Außenring (04) und einem zu diesem drehbaren Innenring (05), sowie eine mit dem Wälzlager (02) verbundene Sensoreinrichtung (03) gemäß einem der Ansprüche 1 bis 8.

## Claims

1. A sensor device (03) for a rolling bearing (02) having an outer ring (04) and an inner ring (05) that can be rotated relative thereto, wherein the sensor device comprises:
• at least one sensor (17) which can be connected for conjoint rotation with one of the two bearing rings (04, 05),
• at least one signal transmitter (20) which can be connected for conjoint rotation with the other of the two bearing rings (04, 05),
wherein the sensor device (03) further comprises an external ring (08) which can be fastened to an end face of the outer ring (04) of the rolling bearing (02) and an internal ring (09) which can be fastened to an end face of the inner ring (05) of the rolling bearing (02), wherein the sensor (17) and signal transmitter (20) are arranged on mutually opposite lateral surfaces of the external and internal ring (08, 09), and wherein the external ring (08) is designed as an open C-shaped ring, such that a self-centring of the external ring (08) takes place during assembly.

2. The sensor device (03) according to claim 1, **characterised in that** the sensor (17) is arranged on a flexible printed circuit board (15) fastened to the lateral surface of the external or internal ring (08, 09).

3. The sensor device (03) according to claim 2, **characterised in that** the printed circuit board (15) is fixed to the lateral surface by means of a potting compound (19).

4. The sensor device (03) according to one of claims 1 to 3, **characterised in that** it can be fastened to the rolling bearing (02) by means of an adhesive film (10).

5. The sensor device (03) according to claim 4, **characterised in that** the adhesive film (10) comprises a first circumferential section (12) in the region of the internal ring (09) and a second circumferential section (13) in the region of the external ring (08), that the first and the second sections (12, 13) are connected to one another by means of a plurality of separating webs (14), wherein the separating webs (14) are designed such that they tear when there is a force acting in the circumferential direction during the first start-up.

6. The sensor device (03) according to one of claims 1 to 5, **characterised in that** the internal ring (09) is designed as a centrifugal disc.

7. The sensor device (03) according to one of claims 1 to 6, **characterised in that** it has a connection cable (18) for connection to an evaluation unit, wherein the connection cable (18) is fastened to the printed circuit board (15) and is guided out the external ring (08) in the region of a missing circular ring segment.

8. The sensor device (03) according to one of claims 2 to 7, **characterised in that** a voltage supply and sensor electronic components are arranged on the printed circuit board (15), and that the components (17) arranged on the printed circuit board (15) are electrically connected via conductor tracks.

9. A rolling bearing arrangement (01) comprising a rolling bearing (02) having an outer ring (04) and an inner ring (05) rotatable relative thereto, and a sensor device (03) according to one of claims 1 to 8 connected to the rolling bearing (02).

## Revendications

1. Système de capteur (03) pour un palier de roulement (02) comprenant une bague extérieure (04) et une bague intérieure (05) pouvant tourner par rapport à celle-ci, le système de capteur comprenant :
• au moins un capteur (17) pouvant être relié de manière solidaire en rotation à l'une des deux bagues de palier (04, 05),
• au moins un transmetteur de signal (20) pouvant être relié de manière solidaire en rotation à l'autre des deux bagues de palier (04, 05),
le système de capteur (03) comprenant en outre une bague extérieure (08) pouvant être fixée sur une face frontale de la bague extérieure (04) du palier de roulement (02) et une bague intérieure (09) pouvant être fixée sur une face frontale de la bague intérieure (05) du palier de roulement (02), le capteur (17) et le transmetteur de signal (20) étant disposés sur des surfaces enveloppantes se faisant face de la bague extérieure et de la bague intérieure (08, 09) et la bague extérieure (08) étant conçue comme une bague ouverte en forme de C, de manière à pouvoir effectuer un auto-centrage de la bague extérieure (08) au moment du montage.

2. Système de capteur (03) selon la revendication 1, **caractérisé en ce que** le capteur (17) est disposé sur une carte de circuit imprimé flexible (15) fixée à la surface enveloppante de la bague extérieure ou intérieure (08, 09).

3. Système de capteur (03) selon la revendication 2, **caractérisé en ce que** la carte de circuit imprimé (15) est fixée à la surface enveloppante au moyen d'une masse de scellement (19).

4. Système de capteur (03) selon l'une des revendications 1 à 3, **caractérisé en ce qu'**il peut être fixé au palier de roulement (02) au moyen d'un film adhésif (10).

5. Système de capteur (03) selon la revendication 4, **caractérisé en ce que** le film adhésif (10) comprend une première section circonférentielle (12) dans la zone de la bague intérieure (09) et une seconde section circonférentielle (13) dans la zone de la bague extérieure (08), **en ce que** les première et seconde sections (12, 13) sont reliées l'une à l'autre au moyen d'une pluralité de séparateurs (14), les séparateurs (14) étant conçus de telle sorte qu'ils se déchirent dans la direction circonférentielle lorsqu'une force est appliquée lors du premier démarrage.

6. Système de capteur (03) selon l'une des revendications 1 à 5, **caractérisé en ce que** la bague intérieure (09) est réalisée sous forme de disque centrifuge.

7. Système de capteur (03) selon l'une des revendications 1 à 6, **caractérisé en ce qu'**il possède un câble de connexion (18) pour la connexion à une unité d'évaluation, le câble de connexion (18) étant fixé à la carte de circuit imprimé (15) et guidé vers l'extérieur de la bague extérieure (08) au niveau d'un segment de bague circulaire manquant.

8. Système de capteur (03) selon l'une des revendications 2 à 7, **caractérisé en ce qu'**une alimentation en tension et des composants électroniques capteurs sont disposés sur la carte de circuit imprimé (15) et **en ce que** les composants (17) disposés sur la carte de circuit imprimé (15) sont connectés électriquement par l'intermédiaire de pistes conductrices.

9. Ensemble formant palier de roulement (01) comprenant un palier de roulement (02) avec une bague extérieure (04) et une bague intérieure (05) pouvant tourner autour de celle-ci et un système de capteur (03) relié au palier de roulement (02) selon l'une des revendications 1 à 8.
